# EUROPEAN PATENT SPECIFICATION

(11) **EP 3 112 268 B1**
(45) Date of publication and mention of the grant of the patent: **26.07.2023**
(21) Application number: 16177182.9
(22) Date of filing: 30.06.2016
(51) Int. Cl.: B64D 13/06, F02C 6/08

(54) **AIRCRAFT ENVIRONMENTAL CONTROL SYSTEM SELECTIVELY POWERED BY THREE BLEED PORTS**
DURCH DREI ZAPFLUFTANSCHLÜSSE SELEKTIV BETRIEBENES FLUGZEUGUMGEBUNGSKONTROLLSYSTEM
SYSTÈME DE COMMANDE ENVIRONNEMENTAL D'AÉRONEF SÉLECTIVEMENT ALIMENTÉ PAR TROIS ORIFICES DE PURGE

(30) Priority: 30.06.2015 US 201514755929
(43) Date of publication of application: 04.01.2017
(73) Proprietor: Hamilton Sundstrand Corporation, Charlotte, NC 28217 (US)
(72) Inventor: BRUNO, Louis J., Ellington, CT 06029 (US); ZYWIAK, Thomas M., Southwick, MA 01077 (US)
(74) Representative: Dehns

(56) References cited:
- EP-A1- 2 845 803
- EP-A1- 2 848 534
- EP-A1- 2 862 803

## Description

### CROSS-REFERENCE TO RELATED APPLICATIONS

This application claims the benefit of U.S. Patent Application Serial No. 14/088,557, filed on November 25, 2013, and U.S. Provisional Patent Application Serial No. 61/872,941 filed on September 3, 2013.

### BACKGROUND

Embodiments of the present disclosure relate to aircraft environmental control systems, and more particularly, to a gas turbine engine compressor air supply of an aircraft environmental control system.

In a typical gas turbine engine, a compressor compresses air and passes that air along a primary flow path to a combustor where it is mixed with fuel and combusted. The combusted mixture expands and is passed to a turbine, which is forced to rotate due to the passing combusted mixture. When used on an aircraft, the primary purpose of this system is to provide propulsive force for the aircraft.

In some gas turbine engines, a portion of the air compressed by the compressor is diverted from the primary flow path to a bleed inlet of a bleed air system. This compressed bleed air can be used for a variety of purposes, such as to de-ice a wing or to provide pressurized air to a cabin of the aircraft. Because the bleed air is often at an undesirably high temperature, a heat exchanger is used to cool the bleed air. Bleeding off and cooling compressed air reduces thrust, thus reducing the efficiency of the compressor and the entire gas turbine engine. Moreover, the heat exchanger takes up a relatively large amount of space and can increase the overall weight of the bleed air system. The higher the pressure of the compressed bleed air the greater the efficiency debit to the gas turbine engine.

EP 2848534 A1 relates to aircraft environmental control systems. EP 2845803 A1 relates to aircraft environmental control systems. EP 2862803 A1 relates to a pneumatic system for an aircraft.

### BRIEF DESCRIPTION

According to one embodiment of the disclosure, an engine for an aircraft and an engine compressor bleed system of the engine is provided as claimed in claim 1.

According to one embodiment of the disclosure, a method of operating a compressor bleed supply system of an engine for an aircraft is provided as claimed in claim 7.

### BRIEF DESCRIPTION OF THE DRAWINGS

The subject matter, which is regarded as the present disclosure, is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a cross-sectional view of a gas turbine engine of an aircraft;
FIG. 2 is another cross-sectional view of a gas turbine engine within the nacelle assembly;
FIG. 3 is a schematic diagram of an ECS pack of an environmental control system (ECS) of an aircraft;
FIG. 4 is a schematic diagram of another ECS pack of an environmental control system (ECS) of an aircraft;
FIG. 5 is a schematic diagram of a bleed air supply system fluidly coupling a gas turbine engine and an ECS pack of an aircraft; and
FIG. 6 is a schematic diagram of the various flight conditions that occur during a typical aircraft flight.

The detailed description explains embodiments of the present disclosure, together with advantages and features, by way of example with reference to the drawings.

### DETAILED DESCRIPTION

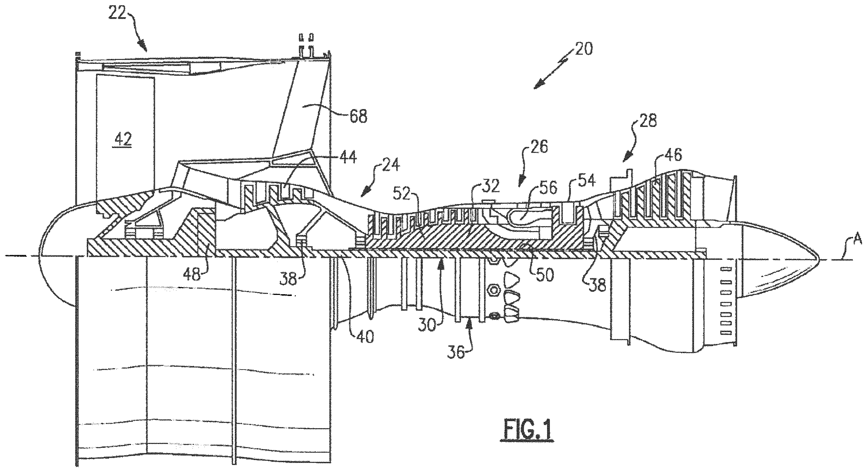

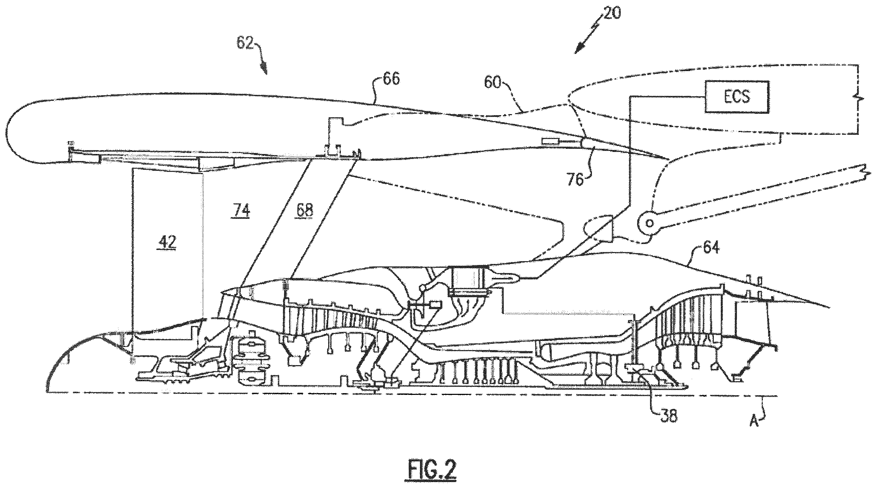

Referring now to FIGS. 1 and 2, an example of a gas turbine engine 20 configured for use in an aircraft is illustrated schematically. The gas turbine engine 20 disclosed herein is a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path while the compressor section 24 drives air along a core flow path for compression and communication into the combustor section 26 and then expansion through the turbine section 28. Although depicted as a turbofan gas turbine engine 10 in the disclosed non-limiting embodiment, it should be understood that the concepts described herein are not limited to use with turbofans as the teachings may be applied to other types of turbine engines, such as three-spool architectures for example.

The engine 20 generally includes a low spool 30 and a high spool 32 mounted for rotation about an engine central longitudinal axis A relative to an engine static structure 36 via several bearing systems 38. Although the engine 20 illustrated and described herein includes a high spool 32 and a low spool 30, other configurations, such as an engine 20 also including an intermediate spool (not shown) for example, are within the scope of the present disclosure. It should also be understood that bearing systems 38 at various locations may alternatively or additionally be provided.

The low spool 30 generally includes an inner shaft 40 that interconnects a fan 42, a low pressure compressor 44, and a low pressure turbine 46. The inner shaft 40 may be connected to the fan 42 directly or through a geared architecture 48 to drive the fan 42 at a different, typically lower speed than the low spool 30. The high spool 32 includes an outer shaft 50 that interconnects a high pressure compressor 52 and a high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 56 and low pressure turbine 46. The turbines 54, 46 rotationally drive the respective low spool 30 and high spool 32 in response to the expansion.

With reference to FIG. 2, the gas turbine engine 20 is mounted to an engine pylon structure 60 within an engine nacelle assembly 62 as is typical of an aircraft designed for subsonic operation. The nacelle assembly 62 generally includes a core nacelle 64 and a fan nacelle 66. It should be appreciated that the core nacelle 64 and the fan nacelle 66 may be of various configurations.

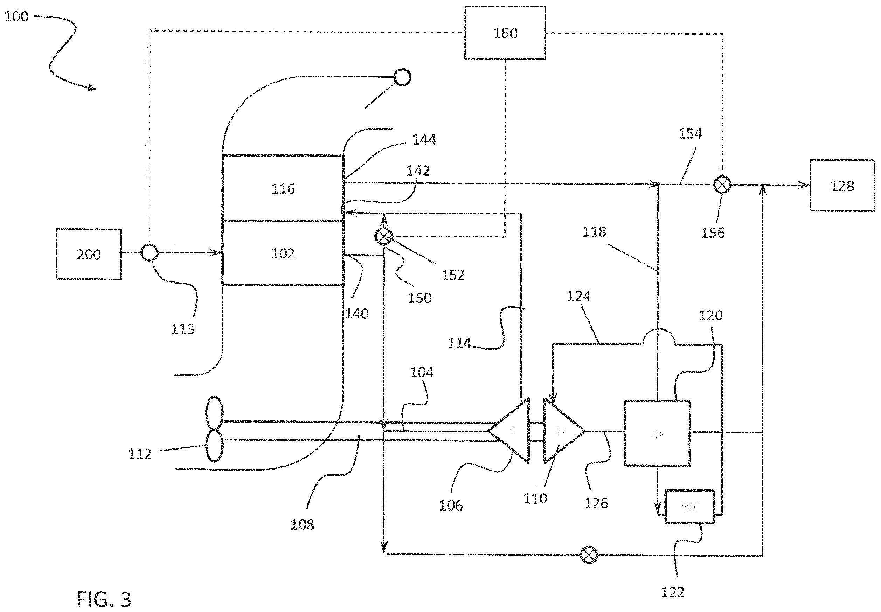

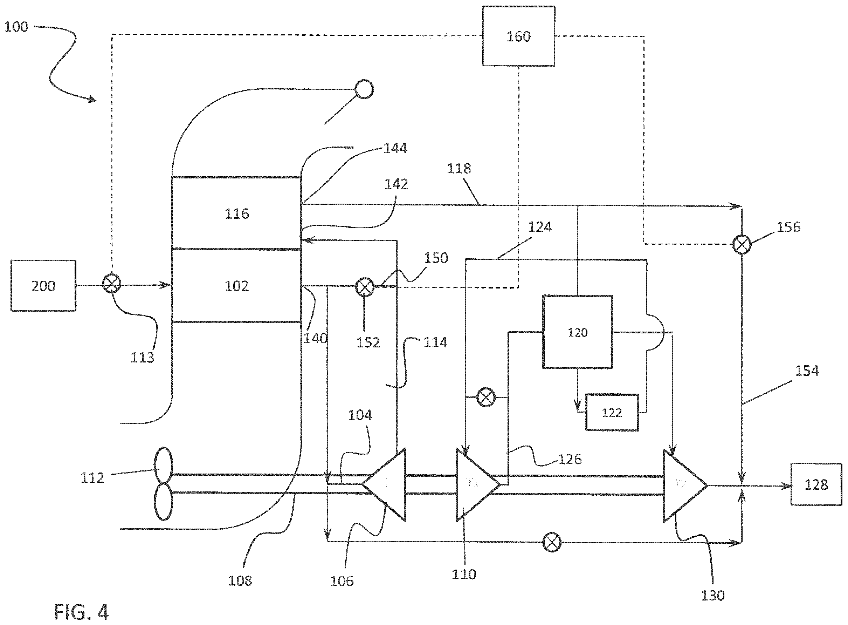

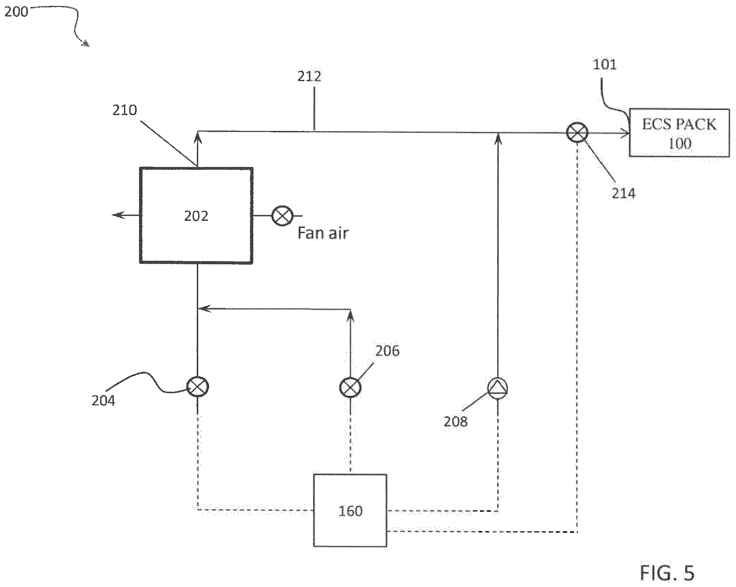

Referring now to FIGS. 3 and 4, each pack 100 of an environmental control system (ECS) of the aircraft is supplied with compressor bleed air from one of the gas turbine engines 20 by a compressor bleed air supply system 200 (see FIG. 5). The ECS may include any number of ECS packs 100 configured to supply conditioned air to various heat loads of the aircraft. Bleed air from the supply system 200 is input to a primary heat exchanger 102 such that the bleed air is in a heat exchange relationship with RAM or ambient air. After the bleed air is cooled in the primary heat exchanger 102, the resulting cooler air is communicated through a passage 104 to a compressor 106, where the bleed air is compressed to a high pressure. The compressor 106 may be located on a common shaft 108 with a first turbine 110 and a fan 112. Together the fan 112, compressor 106, and first turbine 110 define an air cycle machine (ACM).

Compressed air exits the compressor 106 through a passage 114 and is provided to a secondary heat exchanger 116 configured to further cool the compressed air by heat exchange with a RAM air flow. Compressed, cooled air bearing water vapor exits from the secondary heat exchanger 116 and flows through a duct 118 to a condensing heat exchanger 120. The condensing heat exchanger 120 is configured to further cool the air by condensing and separating the water into a water extractor 122. Dehumidified air exits the water extractor 122 and is provided, through a passage 124, to a first turbine 110. The bleed air is expanded and water vapor in the air is further condensed through the first turbine 110 of the ACM. The cooled air flows through a passage 126 back to the condensing heat exchanger 120, where the air is heated to a relatively warmed temperature, and is then supplied to the air loads (illustrated schematically at 128) of the aircraft, such as to the cabin for example.

The ECS pack 100 illustrated in FIG. 4, includes a second turbine 130 arranged on the shaft 108 of the fan 112, compressor 106, and first turbine 110. After the bleed flow exits from a second pass 126 through the condensing heat exchanger 120, the bleed air is provided to the second turbine 130, where the air is further expanded, before being provided to the air loads 128 of the aircraft. In one embodiment, a reheater (not shown) configured to further cool the bleed air may be arranged between the secondary heat exchanger 116 and the condensing heat exchanger 120. The three wheel (FIG. 3) and four wheel (FIG. 4) ACM ECS packs 100 described herein are for illustrative purposes only, and an ECS pack 100 having an ACM of another configuration is within the scope of the present disclosure.

Referring again to the ECS packs 100 illustrated in FIGS. 3 and 4, a first conduit 150 including a first valve 152 connects the outlet 140 of the primary heat exchanger 102 to the inlet 142 of the secondary heat exchanger 116. A second conduit 154 including a second valve 156 extends from outlet 144 of the secondary heat exchanger 116 to the plurality of air loads 128 of the aircraft. The first and second valve 152, 156 may be any type of valve, including but not limited to a check valve, ball valve, and butterfly valve for example. The first valve and the second valve are operably coupled to a controller 160 configured to move each of the valves between a first closed position and a second open position.

Each ECS pack 100 is configured to operate in a first normal mode and a second bypass mode. When the ECS pack 100 is in the first normal mode, the first valve 152 and the second valve 156 are closed such that the bleed air flows through the ACM in a conventional manner. When the ECS pack 100 is in the second, bypass mode, both the first valve 152 and the second valve 156 are at least partially open. When the first valve 152 is open, the majority of the bleed air will flow from the primary heat exchanger 102 directly to the secondary heat exchanger 116; however, a small portion of the bleed air will flow through the compressor 106. When the second valve 156 is open, the majority of the bleed air flows from the secondary heat exchanger 116 directly to the air loads 128 of the aircraft and only a small portion of the bleed air is provided to the turbine 110. The small amount of air provided to the turbine 110 via the second valve 156 allows for rotation of the ACM at a minimal operational speed to prevent failure thereof. In one embodiment, the air flow to the turbine 110 is controlled by the location of the second valve 156 within the ECS pack 100 and also by the flow rate of bleed air through the second valve 156.

The compressor bleed air supply system 200 configured to supply air from the gas turbine engine 20 to an ECS pack 100 is illustrated in more detail in FIG. 5. The compressor bleed air supply system 200 includes a precooler 202 which may be used to cool the compressor bleed air before it is provided to the ECS pack 100. The precooler 202 includes an air to air heat exchanger in fluid communication with a source of cooling air, such as the bypass air flow in the bypass flow path 74 for example.

The compressor bleed air supply system 200 includes a high pressure port 204, an intermediate pressure port 206, and a low pressure port 208, configured to bleed air from various portions of an engine 20. The high pressure port 204, intermediate pressure port 206, and low pressure port 208 are arranged such that the pressure of the bleed air provided at the high pressure port 204 generally exceeds the pressure of the bleed air provided from the intermediate pressure port 206. Similarly, the bleed air provided by the intermediate pressure port 206 has a pressure generally greater than the bleed air provided by the low pressure port 208. As a result, the temperature of the bleed air at the high pressure port 204 is warmest, the temperature of the bleed air at the low pressure port 208 is coolest, and the temperature of the bleed air at the intermediate port 206 is generally there between.

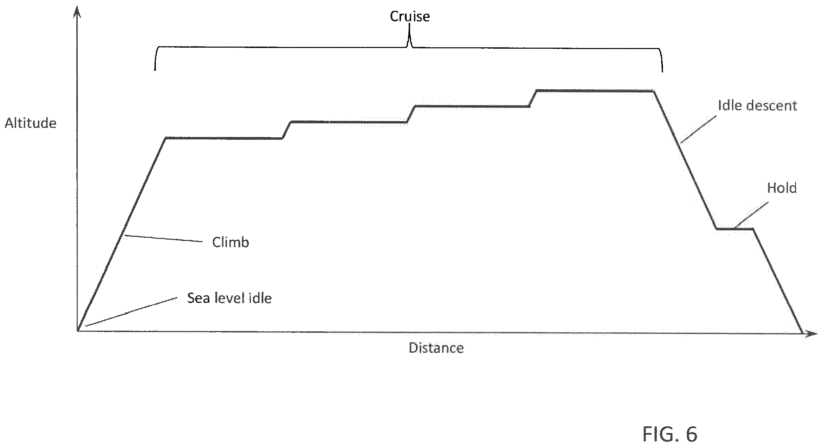

Referring now to FIG. 6, an example of the various flight conditions that occur during a typical flight of an aircraft are illustrated. Upon takeoff, the aircraft begins to climb until reaching a desired cruising altitude, typically between 10668 and 13106 meters (35000 and 43000 feet) for a large commercial aircraft. When preparing to land, after flying a desired distance, the aircraft enters into a descent where one of more of the engines 20 are idle. In some instances, such as in the event of excessive incoming and outgoing traffic at an airport, the aircraft may enter into a hold condition at some altitude below the cruising altitude.

The position of the ports 204, 206, 208 may vary based on the configuration of the aircraft and the type of engines being used. In addition, by positioning one or more of the ports 204, 206, 208 an optimized position relative to an engine 20, the operational efficiency of the ECS pack 100 during one or more of the flight conditions as shown in FIG. 6 may be maximized. In one embodiment, the compressor bleed air supply system 200 is configured to draw air from the high pressure port 204 when the aircraft is in an idle condition, such as when the aircraft is stationary on the ground or when the aircraft is in a descent for example. Generally during an idle or descent flight condition, the engine 20 from which the port 204 is configured to bleed air operates at the minimum allowable engine speed to prevent engine stall or other adverse flight conditions. When arranged at the optimized positon, the bleed air provided by the high pressure port 204 during an idle or descent condition has a pressure generally equal to or greater than the pressure of the cabin.

Similarly, the compressor bleed air supply system 200 may be configured to draw air from the intermediate pressure port 206 when the aircraft is in a hold position. When arranged at the optimized position, the intermediate pressure port 206 is configured to provide bleed air having a pressure at least equal to a minimum pressure required to operate an anti-ice system of the aircraft, such as a pneumatic wing anti-ice system for example. The compressor bleed air supply system 200 is configured to draw air from the low pressure port 208 during the remaining flight conditions, such climb, and cruise for example. When the low pressure port is located at an optimized position, during one or more of the remaining flight conditions, the low pressure port 208 is configured to provide bleed air having a pressure equal to the pressure of the cabin in the aircraft during a climb, or cruise flight condition. In addition, a temperature of the bleed air drawn through the low pressure port 208 during climb, or cruise must not exceed a temperature greater than a predetermined temperature. The predetermined temperature may be 246°C (475°F) during transient conditions of the aircraft, and 232°C (450°F) during steady state conditions of the aircraft.

In one embodiment, the high pressure port 204 is arranged adjacent an end of the high pressure compressor 52 and the intermediate pressure port is located adjacent a central portion of the high pressure compressor 52 when in an optimized position. The low pressure port 208 may be configured to bleed air from a portion of the high spool 32, from a portion of the low spool 30, or from between the high spool 32 and low spool 30. Alternatively, in embodiments where the engine 20 additionally includes an intermediate spool, any of the ports 204, 206, 208 may be configured to draw bleed air directly from the intermediate spool, or from an area between the intermediate spool and the adjacent high pressure spool 32 or low pressure spool 30.

Referring again to FIG. 5, a valve at each port 204, 206, 208 is operably coupled to a controller 160. The controller 160 may be the same controller configured to operate the plurality of valves 152, 156 of the ECS packs 100, or alternatively, may be different. The controller 160 is configured to operate the valves that control the flow of bleed air from each of the ports 204, 206, 208. In one embodiment, only one of the high pressure port 204, intermediate pressure port 206, and low pressure port 208 of a compressor bleed air supply system 200 is open at any given time. It should be understood that various types of valves and control strategies may be used, including check valves that are controlled indirectly by pressure changes in the system as a result of opening or closing other valves in the bleed air supply system.

Under certain flight conditions, when the temperature and pressure of the ambient air combined with the power setting of the turbine engine result in the temperature of the bleed air at the low pressure port 208 exceeding a predefined threshold, such as 246°C (475°F) for example, the controller 160 opens both the intermediate pressure port 206 and the low pressure port 208. The bleed air from the intermediate pressure port 206, cooled by the precooler 202, is mixed with the warmer bleed air from the low pressure port 208 to generate a resultant air mixture having a temperature below the predefined threshold. In order to reduce the total amount of efficiency lost in the turbine engine the amount of cool air from the intermediate pressure port 208 provided is the minimum required to achieve a temperature of the resultant air mixture below the predefined threshold.

The high pressure port 204 and the intermediate pressure port 206 are both fluidly coupled to the precooler 202 such that bleed air drawn through either port 204, 206 first passes through the precooler 202 before being provided to an ECS pack 100. As the air is cooled in the precooler 202, a pressure drop occurs in the air provided thereto from either the high pressure port 204 or the intermediate pressure port 206. The low pressure port 208 is fluidly coupled to a conduit 212 extending from the outlet 210 of the precooler 202 to the ECS pack 100. Because the bleed air supplied at the low pressure port 208 is generally cooler than the air from the intermediate or high pressure port 204, 206, the low pressure bleed air does not need to be cooled before being supplied to the ECS pack 100. As a result, air from the low pressure port 208 bypasses the precooler 202 and is supplied directly to the ECS pack 100. In one embodiment, a valve 214 is arranged within the conduit 212 adjacent to the inlet 101 of the ECS pack 100. The controller 160 is operably coupled to the valve 214 and is configured to regulate the flow of bleed air into the ECS pack 100.

The controller 160 includes an algorithm configured to determine which pressure port (i.e. the high pressure port 204, intermediate pressure port 206, or low pressure port 208) of each bleed air supply system 200 to open and also what mode to operate a corresponding ECS pack 100 receiving the bleed air supplied from each system 200. The algorithm optimizes the energy of the aircraft as a function of the environmental conditions of the day, the altitude of the aircraft, and the mode of flight (e.g. climb, cruise, descend), the engine operating pressure and a difference in temperature between the supplied bleed air and the demand of the air loads 128. For example, when the temperature of the bleed air is significantly warmer than the temperature demand of the air load 128 for the cabin, the controller 160 is generally configured to operate an ECS pack 100 in the first, normal mode so that the bleed air may be cooled additionally by the ACM. Alternatively, when the temperature of the bleed air is less than or close to the temperature demand of the air load 128, the controller 160 is generally configured to operate an ECS pack 100 in the second, bypass mode. Similarly, the pressure port 204, 206, 208 of each supply system 200 used to provide bleed air may be selected in part based on the pressure required to operate the ACM of a corresponding ECS pack 100.

In some instances, as in conventional aircrafts, the controller 160 may use the same high pressure, intermediate pressure, or low pressure port 204, 206, 208 of each supply system 200 of the aircraft to supply bleed air from a plurality of engines 20 to a plurality of corresponding ECS packs 100. As a result, each of the plurality of ECS packs 100 generally operates in the same first normal mode, or second bypass mode. In another embodiment, the controller 160 may use a first pressure port, such as the intermediate pressure port 206 for example, to supply bleed air from at least one engine 20 to at least one corresponding ECS pack 100 and the controller may use a second pressure port, different from the first pressure port, such as the low pressure port for example, to supply bleed air from another engine 20 to at least another ECS pack 100. In embodiments where the supply systems 200 use different ports, the ECS pack 100 configured to receive bleed air from the first supply system 200 may be configured to operate in either the first normal mode or the second bypass mode. Similarly, the ECS pack 100 configured to receive bleed air from the second supply system 200 may be configured to operate in the same mode, or in a different mode, as the other ECS packs 100.

Inclusion of a low pressure port 208 in the compressor air bleed supply systems 200 and inclusion of bypass valves configured to minimize the flow through the ACM in the ECS pack 100, limit the additional cooling required of the bleed air. By optimally selecting from the three available pressure ports (204, 206, and 208) the aircraft's environmental control system can be operated in the most efficient mode, thereby reducing the overall bleed related penalties and improving the fuel burn of the aircraft over the duration of a normal flight profile.

The present disclosure is not to be seen as limited by the foregoing description, but is only limited by the scope of the appended claims.

## Claims

1. A system comprising:
an engine (20) for an aircraft, and an engine compressor bleed system (200) of the engine (20), the engine compressor bleed system comprising:
a plurality of compressor pressure ports (204, 206, 208) configured to supply bleed air to satisfy a cooling load for at least a first stage of a flight profile of an aircraft, wherein
a first compressor pressure port (208) of the plurality of compressor pressure ports is positioned in the compressor of the engine to provide a first bleed air flow having a first pressure at least equal to a cabin pressure of an aircraft during a climb or a cruise flight condition of the aircraft and a first temperature that does not exceed a predetermined threshold, wherein the first stage of the flight profile is the climb or cruise flight condition;
a precooler (202), wherein the first compressor pressure port (208) is configured to direct an entirety of the first bleed air flow along a bypass pathway bypassing the precooler (202), wherein a second compressor pressure port (206) of the plurality of compressor pressure ports is configured to direct a second bleed air flow through the precooler (202), the second bleed air flow having a second pressure greater than the first pressure, and wherein a third compressor pressure port (204) of the plurality of compressor pressure ports is configured to direct a third bleed air flow from the third compressor pressure port (204) through the precooler (202);
a precooler outlet conduit (212) downstream of the precooler (202) configured to mix the entirety of the first bleed air flow and the second bleed air flow upstream of an air to air heat exchanger (102) of an environmental control system (100); wherein
the first compressor pressure port (208) is fluidly coupled to the precooler outlet conduit (212) such that air from the low pressure port (208) bypasses the precooler (202) and is supplied directly to the environmental control system (100) via the bypass pathway; and
the second and third compressor pressure ports (206, 204) are fluidly coupled to the precooler (202) such that bleed air drawn through either port (206, 204) first passes through the precooler (202) before being provided to the environmental control system (100);
wherein the engine includes at least two selected from the following: a high pressure spool, an intermediate pressure spool, and a low pressure spool; and
wherein the first compressor pressure port is configured to bleed air from the high pressure spool; and
wherein the first pressure port is a low pressure port relative to the remainder of the plurality of compressor pressure ports.

2. The system according to claim 1, wherein the predetermined threshold is 246°C (475°F).

3. The system according to claim 1 or 2, wherein the second pressure port (206) is configured to provide bleed air having a pressure at least equal to a cabin pressure of an aircraft when the aircraft is in a second stage of the flight profile.

4. The system according to claim 3, wherein in the second stage of the flight profile, the aircraft is in a descent and the engine (20) is operating at a minimum allowable speed.

5. The system according to claim 3, wherein the third pressure port is configured to provide bleed air having a pressure between the pressure of the bleed air provided at the first port and the pressure of the bleed air provided at the second port.

6. The system according to claim 5, wherein the third pressure port is configured to provide bleed air having a pressure at least equal to a minimum pressure necessary for operation of an anti-ice system.

7. A method of operating a compressor bleed supply system (200) of an engine (20) for an aircraft, comprising:
identifying a flight condition of the aircraft; and
selecting one of a plurality of pressure ports (204, 206, 208) configured to supply bleed air to satisfy a cooling load for the aircraft, **characterised in that**
a first pressure port (208) of the plurality of pressure ports is positioned in a compressor of the engine to provide bleed air having a pressure at least equal to a cabin pressure of an aircraft during a climb or cruise flight condition of the aircraft and a temperature that does not exceed a predetermined threshold; wherein the first pressure port is a low pressure port relative to the remainder of the plurality of compressor pressure ports;
directing, by the first pressure port (208) an entirety of the first bleed air flow along a bypass pathway bypassing a precooler (202),
directing, by a second compressor pressure port (206) of the plurality of compressor pressure port, a second bleed air flow through the precooler (202), the second bleed air flow having a second pressure greater than the first pressure, and
directing, by a third compressor pressure port (204) of the plurality of compressor pressure ports, a third bleed air flow from the third compressor pressure port (204) through the precooler (202);
mixing, by a precooler outlet conduit downstream of the precooler (202), the entirety of the first bleed air flow and the second bleed air flow upstream of an air to air heat exchanger (102) of an environmental control system (100);
wherein the engine includes at least two selected from the following: a high pressure spool, an intermediate pressure spool, and a low pressure spool; and
wherein the first compressor pressure port is configured to bleed air from the high pressure spool.

8. The method of operating a compressor bleed supply system (200) according to claim 7, wherein the predetermined threshold is 246°C (475°F).

## Patentansprüche

1. System, umfassend:
ein Triebwerk (20) für ein Flugzeug und ein Triebwerkkompressor-Zapfluftsystem (200) des Triebwerks (20), wobei das Triebwerkkompressor-Zapfluftsystem Folgendes umfasst:
eine Vielzahl von Kompressordruckanschlüssen (204, 206, 208), die konfiguriert sind, um Zapfluft zu liefern, um eine Kühllast für mindestens eine erste Stufe eines Flugprofils eines Flugzeugs zu erfüllen, wobei ein erster Kompressordruckanschluss (208) der Vielzahl von Kompressordruckanschlüssen in dem Kompressor des Triebwerks positioniert ist, um einen ersten Zapfluftstrom mit einem ersten Druck, der mindestens gleich einem Kabinendruck eines Flugzeugs während eines Steigflug- oder Reiseflugzustands des Flugzeugs ist, und einer ersten Temperatur, die einen vorbestimmten Schwellenwert nicht überschreitet, bereitzustellen, wobei die erste Stufe des Flugprofils der Steigflug- oder Reiseflugzustand ist;
einen Vorkühler (202), wobei der erste Kompressordruckanschluss (208) konfiguriert ist, um eine Gesamtheit des ersten Zapfluftstroms entlang eines Bypass-Weges unter Umgehung des Vorkühlers (202) zu leiten, wobei ein zweiter Kompressordruckanschluss (206) der Vielzahl von Kompressordruckanschlüssen konfiguriert ist, um einen zweiten Zapfluftstrom durch den Vorkühler (202) zu leiten, wobei der zweite Zapfluftstrom einen zweiten Druck aufweist, der größer als der erste Druck ist, und wobei ein dritter Kompressordruckanschluss (204) der Vielzahl von Kompressordruckanschlüssen konfiguriert ist, um einen dritten Zapfluftstrom von dem dritten Kompressordruckanschluss (204) durch den Vorkühler (202) zu leiten;
eine Vorkühler-Auslassleitung (212) stromabwärts des Vorkühlers (202), die konfiguriert ist, um die Gesamtheit des ersten Zapfluftstroms und des zweiten Zapfluftstroms stromaufwärts eines Luft-zu-Luft-Wärmeaustauschers (102) eines Umgebungskontrollsystems (100) zu mischen; wobei
der erste Kompressordruckanschluss (208) fluidmäßig mit der Vorkühlerauslassleitung (212) gekoppelt ist, sodass Luft von dem Niederdruckanschluss (208) den Vorkühler (202) umgeht und über den Bypass-Weg direkt dem Umgebungskontrollsystem (100) geliefert wird; und
der zweite und der dritte Kompressordruckanschluss (206, 204) fluidmäßig mit dem Vorkühler (202) gekoppelt sind, sodass Zapfluft, die durch einen der beiden Anschlüsse (206, 204) angesaugt wird, zunächst durch den Vorkühler (202) strömt, bevor sie dem Umgebungskontrollsystem (100) geliefert wird;
wobei das Triebwerk mindestens zwei aus dem Folgenden ausgewählte Spulen beinhaltet: eine Hochdruckspule, eine Mitteldruckspule und eine Niederdruckspule; und
wobei der erste Kompressordruckanschluss konfiguriert ist, um Luft von der Hochdruckspule abzuzapfen; und
wobei der erste Druckanschluss ein Niederdruckanschluss in Bezug auf den Rest der Vielzahl von Kompressordruckanschlüssen ist.

2. System nach Anspruch 1, wobei der vorbestimmte Schwellenwert 246 °C (475 °F) beträgt.

3. System nach Anspruch 1 oder 2, wobei der zweite Druckanschluss (206) konfiguriert ist, um Zapfluft mit einem Druck bereitzustellen, der mindestens dem Kabinendruck eines Flugzeugs entspricht, wenn sich das Flugzeug in einer zweiten Stufe des Flugprofils befindet.

4. System nach Anspruch 3, wobei sich das Flugzeug in der zweiten Stufe des Flugprofils im Sinkflug befindet und das Triebwerk (20) mit einer minimal zulässigen Geschwindigkeit betrieben wird.

5. System nach Anspruch 3, wobei der dritte Druckanschluss konfiguriert ist, um Zapfluft mit einem Druck bereitzustellen, der zwischen dem Druck der am ersten Anschluss bereitgestellten Zapfluft und dem Druck der am zweiten Anschluss bereitgestellten Zapfluft liegt.

6. System nach Anspruch 5, wobei der dritte Druckanschluss konfiguriert ist, um Zapfluft mit einem Druck bereitzustellen, der mindestens einem Mindestdruck entspricht, der für den Betrieb eines Enteisungssystems erforderlich ist.

7. Verfahren zum Betreiben eines Kompressor-Zapfluftversorgungssystems (200) eines Triebwerks (20) für ein Flugzeug, umfassend:
Identifizieren eines Flugzustands des Flugzeugs; und
Auswählen eines einer Vielzahl von Druckanschlüssen (204, 206, 208), die konfiguriert ist, um Zapfluft zu liefern, um eine Kühllast für das Flugzeug zu erfüllen, **dadurch gekennzeichnet, dass**
ein erster Druckanschluss (208) der Vielzahl von Druckanschlüssen in einem Kompressor des Triebwerks positioniert ist, um Zapfluft mit einem Druck, der mindestens gleich einem Kabinendruck eines Flugzeugs während eines Steig- oder Reiseflugzustands des Flugzeugs ist, und einer Temperatur, die einen vorbestimmten Schwellenwert nicht überschreitet, bereitzustellen; wobei der erste Druckanschluss ein Niederdruckanschluss in Bezug auf den Rest der Vielzahl von Kompressordruckanschlüssen ist;
Leiten einer Gesamtheit des ersten Zapfluftstroms über den ersten Druckanschluss (208) entlang eines Bypass-Weges unter Umgehung eines Vorkühlers (202),
Leiten eines zweiten Zapfluftstroms über einen zweiten Kompressordruckanschluss (206) der Vielzahl von Kompressordruckanschlüssen durch den Vorkühler (202), wobei der zweite Zapfluftstrom einen zweiten Druck aufweist, der größer als der erste Druck ist, und
Leiten eines dritten Zapfluftstroms von dem dritten Kompressordruckanschluss (204) durch den Vorkühler (202) über einen dritten Kompressordruckanschluss (204) der Vielzahl von Kompressordruckanschlüssen;
Mischen der Gesamtheit des ersten Zapfluftstroms und des zweiten Zapfluftstroms stromaufwärts eines Luft-zu-Luft-Wärmetauschers (102) eines Umweltkontrollsystems (100) über eine Vorkühler-Auslassleitung stromabwärts des Vorkühlers (202);
wobei das Triebwerk mindestens zwei aus dem Folgenden ausgewählte Spulen beinhaltet: eine Hochdruckspule, eine Mitteldruckspule und eine Niederdruckspule; und
wobei der erste Kompressordruckanschluss konfiguriert ist, um Luft von der Hochdruckspule abzuzapfen.

8. Verfahren zum Betreiben eines Kompressor-Zapfluftversorgungssystems (200) nach Anspruch 7, wobei der vorbestimmte Schwellenwert 246 °C (475 °F) beträgt.

## Revendications

1. Système comprenant :
un moteur (20) pour un aéronef, et un système de purge de compresseur de moteur (200) du moteur (20), le système de purge de compresseur de moteur comprenant :
une pluralité d'orifices de pression de compresseur (204, 206, 208) configurés pour fournir de l'air de prélèvement pour satisfaire une charge de refroidissement pour au moins une première étape d'un profil de vol d'un aéronef, dans lequel un premier orifice de pression de compresseur (208) de la pluralité d'orifices de pression de compresseur est positionné dans le compresseur du moteur pour fournir un premier flux d'air de prélèvement ayant une première pression au moins égale à une pression de cabine d'un aéronef pendant une condition de vol en montée ou en croisière de l'aéronef et une première température qui ne dépasse pas un seuil prédéterminé, dans lequel la première étape du profil de vol est la condition de vol en montée ou en croisière ;
un prérefroidisseur (202), dans lequel le premier orifice de pression de compresseur (208) est configuré pour diriger une totalité du premier flux d'air de prélèvement le long d'un trajet de dérivation contournant le prérefroidisseur (202), dans lequel un deuxième orifice de pression de compresseur (206) de la pluralité d'orifices de pression de compresseur est configuré pour diriger un deuxième flux d'air de prélèvement à travers le prérefroidisseur (202), le deuxième flux d'air de prélèvement ayant une deuxième pression supérieure à la première pression, et dans lequel un troisième orifice de pression de compresseur (204) de la pluralité d'orifices de pression de compresseur est configuré pour diriger un troisième flux d'air de prélèvement depuis le troisième orifice de pression de compresseur (204) à travers le prérefroidisseur (202) ;
un conduit de sortie de prérefroidisseur (212) en aval du prérefroidisseur (202) configuré pour mélanger la totalité du premier flux d'air de prélèvement et du deuxième flux d'air de prélèvement en amont d'un échangeur de chaleur air-air (102) d'un système de commande environnemental (100) ; dans lequel
le premier orifice de pression de compresseur (208) est couplé fluidiquement au conduit de sortie de prérefroidisseur (212) de sorte que l'air provenant de l'orifice basse pression (208) contourne le prérefroidisseur (202) et est fourni directement au système de commande environnemental (100) via le trajet de dérivation ; et
les deuxième et troisième orifices de pression de compresseur (206, 204) sont couplés fluidiquement au prérefroidisseur (202) de sorte que l'air de prélèvement aspiré à travers l'un ou l'autre des orifices (206, 204) traverse d'abord le prérefroidisseur (202) avant d'être fourni au système de commande environnemental (100) ;
dans lequel le moteur comporte au moins deux éléments choisis parmi les suivants : une bobine haute pression, une bobine à pression intermédiaire et une bobine basse pression ; et
dans lequel le premier orifice de pression de compresseur est configuré pour prélever de l'air de la bobine haute pression ; et
dans lequel le premier orifice de pression est un orifice basse pression par rapport au reste de la pluralité d'orifices de pression de compresseur.

2. Système selon la revendication 1, dans lequel le seuil prédéterminé est de 246°C (475°F).

3. Système selon la revendication 1 ou 2, dans lequel le deuxième orifice de pression (206) est configuré pour fournir de l'air de prélèvement ayant une pression au moins égale à une pression de cabine d'un aéronef lorsque l'aéronef est dans une seconde étape du profil de vol.

4. Système selon la revendication 3, dans lequel dans la seconde étape du profil de vol, l'aéronef est en descente et le moteur (20) fonctionne à une vitesse minimale autorisée.

5. Système selon la revendication 3, dans lequel le troisième orifice de pression est configuré pour fournir de l'air de prélèvement ayant une pression comprise entre la pression de l'air de prélèvement fourni au premier orifice et la pression de l'air de prélèvement fourni au deuxième orifice.

6. Système selon la revendication 5, dans lequel le troisième orifice de pression est configuré pour fournir de l'air de prélèvement ayant une pression au moins égale à une pression minimale nécessaire au fonctionnement d'un système anti-givrage.

7. Procédé de fonctionnement d'un système d'alimentation de purge de compresseur (200) d'un moteur (20) pour un aéronef, comprenant :
l'identification d'une condition de vol de l'aéronef ; et
la sélection d'un d'une pluralité d'orifices de pression (204, 206, 208) configuré pour fournir de l'air de prélèvement pour satisfaire une charge de refroidissement pour l'aéronef,
**caractérisé en ce que**
un premier orifice de pression (208) de la pluralité d'orifices de pression est positionné dans un compresseur du moteur pour fournir de l'air de prélèvement ayant une pression au moins égale à une pression de cabine d'un aéronef pendant une condition de vol en montée ou en croisière de l'aéronef et une température qui ne dépasse pas un seuil prédéterminé ; dans lequel le premier orifice de pression est un orifice basse pression par rapport au reste de la pluralité d'orifices de pression de compresseur ; le fait de diriger, par le premier orifice de pression (208), une totalité du premier flux d'air de prélèvement le long d'un trajet de dérivation contournant un prérefroidisseur (202),
le fait de diriger, par un deuxième orifice de pression de compresseur (206) de la pluralité d'orifices de pression de compresseur, un deuxième flux d'air de prélèvement à travers le prérefroidisseur (202), le deuxième flux d'air de prélèvement ayant une deuxième pression supérieure à la première pression, et
le fait de diriger, par un troisième orifice de pression de compresseur (204) de la pluralité d'orifices de pression de compresseur, un troisième flux d'air de prélèvement depuis le troisième orifice de pression de compresseur (204) à travers le prérefroidisseur (202) ;
le mélange, par un conduit de sortie de prérefroidisseur en aval du prérefroidisseur (202), de la totalité du premier flux d'air de prélèvement et du deuxième flux d'air de prélèvement en amont d'un échangeur de chaleur air-air (102) d'un système de commande environnemental (100) ;
dans lequel le moteur comporte au moins deux éléments choisis parmi les suivants : une bobine haute pression, une bobine à pression intermédiaire et une bobine basse pression ; et
dans lequel le premier orifice de pression de compresseur est configuré pour purger l'air de la bobine haute pression.

8. Procédé de fonctionnement d'un système d'alimentation de purge de compresseur (200) selon la revendication 7, dans lequel le seuil prédéterminé est de 246°C (475°F).
